# EUROPÄISCHE PATENTANMELDUNG

(11) **EP 0 873 904 A2**
(43) Veröffentlichungstag der Anmeldung: **28.10.1998**
(21) Anmeldenummer: 98102715.4
(22) Anmeldetag: 17.02.1998
(51) Int. Cl.: B60N 2/48

(54) **Kopfstütze für einen Fahrzeugsitz**

(30) Priorität: 22.04.1997 DE 19716903
(71) Anmelder: R. SCHMIDT GMBH, 57368 Lennestadt (DE)
(72) Erfinder: Schmidt, Reinhard, 57368 Lennestadt (DE); Strunk, Harald, 58840 Plettenberg (DE); Pokoj, Ralf, 57368 Lennestadt (DE)
(74) Vertreter: Nöth, Heinz, Dipl.-Phys.

(57) **Zusammenfassung**

Eine Kopfstütze für einen Fahrzeugsitz mit einem gepolsterten Stützenkörper 16, der mittles eines inneren Rahmens 2 an einer im wesentlichen waagrecht verlaufenden und mittels einer Stützeinrichtung, insbesondere Raststangen 13, 14 am Fahrzeugsitz abgestützten Lagerachse 10 in seiner Neigung verstellbar gelagert ist, wobei an drehfest mit dem inneren Rahmen 2 verbundenen Lagerflächen ein Reibschluß durch Federn 13 gebildet wird.

## Beschreibung

Die Erfindung betrifft eine Kopfstütze für einen Fahrzeugsitz mit einem gepolsterten Stützenkörper, der mittels eines inneren Rahmens an einer im wesentlichen waagrecht verlaufenden und mittels einer Stützeinrichtung, insbesondere Raststangen am Fahrzeugsitz abgestützen Lagerachse in seiner Neigung verstellbar gelagert ist.

Aufgabe der Erfindung ist es eine derartige Kopfstütze zu schaffen, welche eine verbesserte Sicherheitsfunktion, insbesondere bei in Fahrzeuglängsrichtung auf den Körper eines Fahrzeuginsassen ausgeübten, überhöhten Kräften während eines Unfallgeschehens aufweist.

Diese Aufgabe wird erfindungsgemäß dadurch gelöst, daß mit dem inneren Rahmen drehfest wenigstens eine zylindrische Lagenfläche, deren Zylinderachse mit der Lagerachse zusammenfällt, verbunden ist und daß wenigstens ein an der von insbesondere Raststangen gebildeten Stützeinrichtung drehfest abgestütztes Reibschlußbauteil mit lösbarem Reibschluß an der wenigstens einen zylindrischen Lagerfläche anliegt.

Beim Lösen des Reibschlusses, der bevorzugt durch eine bezüglich der Lagerachse radial wirkende Klemmkraft erzeugt wird, ist eine Verstellung der Neigung des gepolsterten Stützenkörpers möglich. Durch den Reibschluß wird bei einem Unfall durch starken Kopfaufprall auf den gepolsterten Stützenkörper eine Kraftbegrenzerwirkung erzielt, durch die eine Verringerung der auf den Kopf des Fahrzeuginsassen wirkenden Belastung erreicht wird.

In bevorzugter Weise wird die Klemmkraft durch wenigstens eine Feder, insbesondere eine zylindrische Schraubenfeder, welche mit Klemmsitz an der zylindrischen Lagerfläche anliegt, gebildet. Die wenigstens eine zylindrische Lagerfläche kann dabei an der Innenseite eines hülsenförmig ausgebildeten Lagerteils gebildet sein, wobei die Schraubenfeder mit ihrer Außenseite gegen die innere zylindrische Lagerfläche unter Ausübung einer nach außen gerichteten radialen Klemmkraft angedrückt wird. Es ist jedoch auch möglich, die zylindrische Lagerfläche an der Außenseite eines stabförmigen oder hülsenförmig ausgebildeten Lagerteils vorzusehen, wobei die Innenseite der zylindrischen Schraubenfeder mit radial nach innen gerichteter Klemmkraft auf der zylindrischen Lagerfläche aufsitzt.

Das Lagerteil ist drehfest mit dem inneren Rahmen, um welchen der Polsterkörper des gepolsterten Stützkörpers angeordnet ist, verbunden. Beim Lösen der Klemmkraft, beispielsweise durch Bewegen wenigstens eines der beiden Federenden, kann der innere Rahmen und damit der gepolsterte Stützenkörper der Kopfstütze bezüglich der waagrechten an der bevorzugt durch Raststangen gebildeten Stützeinrichtung gedreht und damit in seiner Neigung verstellt werden. Sobald das wenigstens eine Federende wieder in seine Klemmstellung zurückgebracht ist, wirkt die Feder klemmend auf die wenigstens eine zylindrische Lagerfläche am Lagerteil, sodaß dann wenn der Fahrzeuginsasse bei normalem Fahrbetrieb seinen Kopf am gepolsterten Stützenkörper abstützt, der Stützenkörper durch den gebildeten Reibschluß, welcher von der Klemmkraft der Feder erzeugt wird, gesichert ist. Wie schon erläutert wirkt der Reibschluß, welcher an der zylindrischen Lagerfläche des inneren Rahmens gebildet wird, bei einem Heck- oder Frontalaufprall und starkem Kopfaufschlag auf den gepolsterten Stützenkörper im Sinne einer Belastungsbegrenzung wie ein Kraftbegrenzer. Hierdurch wird eine erhöhte Sicherheitsfunktion der Kopfstütze erreicht.

Bei der Erfindung ist eine stufenlose Verstellung innerhalb des Schwenkbereiches möglich, da in jeder beliebigen Neigungsstellung die auf die zylindrische Lagerfläche radial wirkende Klemmkraft zur Bildung des gewünschten Reibschlusses zur Einwirkung gebracht werden kann.

An Hand der Figuren wird an Ausführungsbeispielen die Erfindung noch näher erläutert.

Es zeigt:
- Fig. 1:: ein erstes Ausführungsbeispiel der Erfindung;
- Fig. 2:: ein zweites Ausführungsbeispiel der Erfindung; und
- Fig. 3:: in (A) - (F) verschiedene Positionen eines Betätigungsmittels zur Herstellung und zum Lösen des Reibschlusses.

Die in den Figuren dargestellten Ausführungsbeispiele einer Kopfstütze für einen Fahrzeugsitz besitzten einen gepolsterten Stützenkörper 16. Im Inneren des gepolsterten Stütenkörpers 16 befindet sich ein innerer Rahmen 2, welcher von der Polsterung des Stützenkörpers umgeben ist. Am Rahmen 2 wird eine Lagerachse 10 gebildet, die bei den Ausführungsbeispielen die Zylinderachse eines zylindrischen Lagerteils 1 ist. Das Lagerteil 1 ist drehfest mit dem inneren Rahmen 2 verbunden.

Das Lagerteil 1 und der drehfest damit verbundene Rahmen 2 sind drehbar um die Lagerachse 10 in einem Lagergehäuse 9 gelagert, welches an einer von Raststangen 13 und 14 gebildeten Stützeinrichtung starr befestigt ist. Über die von den Raststangen 13 und 14 gebildete Stützeinrichtung ist die Kopfstütze an einer nicht näher dargestellten Lehne eines Fahrzeugsitzes in bekannter Weise abgestützt. Anstelle eines Lagergehäuses 9 können auch zwei Lagergehäuse vorgesehen sein.

An dem zylindrischen Lagerteil 1 sind zylindrische Lagerflächen 11 und 12 an der Außenfläche gebildet. An den zylindrischen Lagerflächen 11 und 12 wird jeweils ein Reibschluß von einem an der Stützeinrichtung (Raststangen 13, 14) drehfest, abgestützten Reibschlußbauteil 15 erzeugt. Bei den dargestellten Ausführungsbeispielen wird das Reibschlußbauteil 15 durch eine zylindrische Schraubenfeder 3 gebildet. Die zylindrische Schraubenfeder 3 erzeugt in ihrer Klemmstellung eine radial nach innen gerichtete Klemmkraft, welche die für den Reibschluß erforderliche Normalkraft auf die jeweilige zylindrische Lagerfläche 11 und 12 liefert.

Die jeweilige Feder 3 besitzt in Form von Federschenkeln Federenden 7 und 8. Die Federn 3 haben daher die Wirkung von Schenkelfedern. Das jeweilige Federende 7 ist ortsfest an der Stützeinrichtung (Raststangen 13, 14) abgestützt. Das jeweilige andere Federende 8 ist beweglich ausgebildet, um den Klemmsitz auf den zylindrischen Lagerflächen 11 und 12 und damit den Reibschluß zu lösen. Wenn das jeweilige Federende 8 aus der Klemmposition in eine geöffnete Position geschwenkt ist, kann das Lagerteil 1 zusammen mit dem drehfest damit verbunden Rahmen 2 und somit der Stützenkörper 16 um die Lagerachse 10 in eine gewünschte Neigungsposition geschwenkt werden. Beim Zurückbewegen des geöffneten Federendes 8 in seine Klemmposition übt die Schraubenfeder 3 (Schenkelfeder) wieder eine radial nach innen gerichtete Klemmkraft auf die zylindrischen Lagerflächen 11 und 12 auf der Außenseite des Lagerteils 1 aus. Im normalen Fahrbetrieb ist dann der gepolsterte Stützenkörper 16 verdrehungssicher an der von den Raststangen 13 und 14 gebildeten Stützeinrichtung abgestützt.

Im Crashfall wirkt der von den als Federn 3 an den zylindrischen Lagerflächen 11 und 12 gebildete Reibschluß als Energieabsorber, welcher bei einem starken Kopfaufprall auf den Stützenkörper 16 als Lastbegrenzer eine geringe Drehung des Stützenkörpers 16 um die Lagerachse 10 zuläßt. Hierdurch wird eine Lastbegrenzung bei starkem Kopfaufprall erzielt.

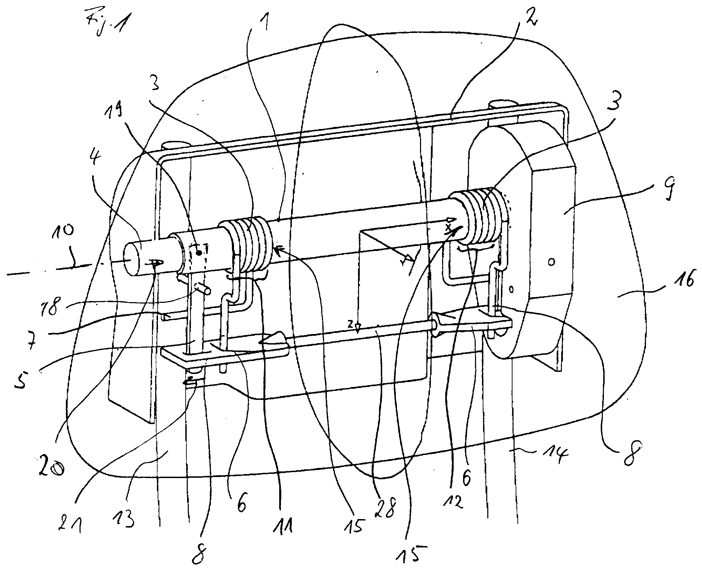

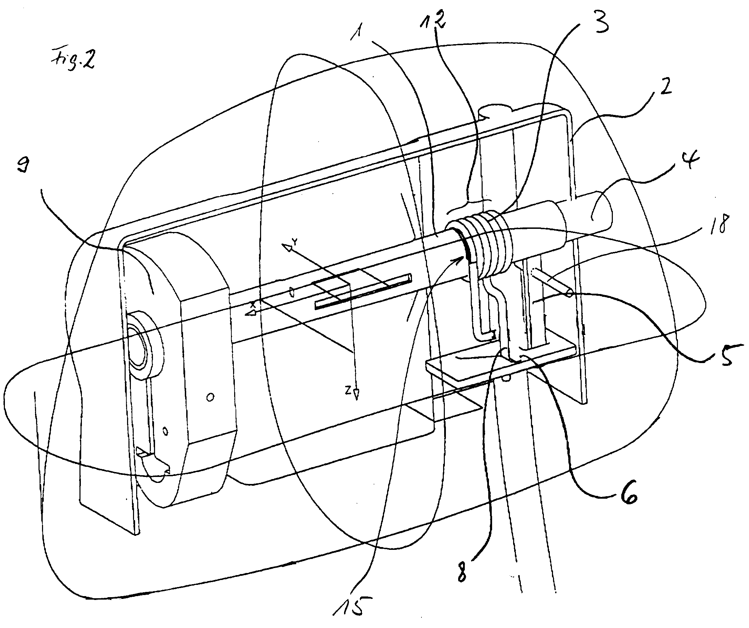

Bei dem in der Figur 1 dargestellten Ausführungsbeispiel werden zwei als Schraubenfedern 3 ausgebildete Reibschlußbauteile 15 verwendet. Beim Ausführungsbeispiel der Figur 2 ist ein Reibschlußbauteil 15 in Form der zylindrischen Schraubenfeder 3 vorgesehen. Anstelle der an der Außenseite des Lagerteils 1 vorgesehenen Federn 3 können auch an der Innenseite eines hülsenförmigen Lagerteils die Federn 3 angeordnet sein. Dabei wird der Reibschluß, bzw. die Klemmwirkung an den Lagerflächen der Innenseite des hülsenförmigen Lagerteils 1 erzielt. Im Folgenden worden noch Betätigungsmechanismen zum Lösen der jeweiligen Feder 3 aus Ihrer Klemmposition und zum Zurückbringen der Feder in die Klemmposition erläutert.

In den Figuren 1 und 2 wird als Betätigungsteil 6 zum Bewegen des Federendes 8 (Federschenkel) als Betätigungsteil 6 jeweils eine Kulisse verwendet, die am Federende 8 angreift. Bei der Ausführungsform der Figur 1 sind zwei Kulissen als Betätigungsteile 6 vorgesehen und in der Figur 2 ist ein Betätigungsteil 6 vorgesehen. Zum Verschieben der jeweiligen Kulisse (Betätigungsteil 6) greift an das Betätigungsteil 6 ein Hebel 5 mit seinem einem Ende an. Der Hebel 5 ist um eine Schwenkachse 18, welche starr mit der von den Raststangen 13 und 14 gebildeten Stützeinrichtung verbunden ist, schwenkbar gelagert. Das andere Hebelende ist an einen Druckknopf 4 in einem Anlenkpunkt 19 angelenkt. Beim Drücken des Betätigungsknopfes 4 in Pfeilrichtung 20 wird der Hebel 5 um die Schwenkachse 18 geschwenkt, sodaß das als Kulisse ausgebildete Betätigungsteil 6 in Pfeilrichtung 21 verschoben wird. Dabei wird das jeweilige bewegliche Federende 8 aus seiner Klemmposition in die gelöste Position gebracht, sodaß eine Verdrehung des Stützenkörpers 16 wie oben erläutert möglich ist. Der Druckknopf 4 ist in Richtung der Lagerachse 10 im Lagerteil 1 bei den Ausführungsbeilspielen der Figuren 1 und 2 verschiebbar gelagert. In der Figur 1 wird über einen Verbindungsstab 28 die Verschiebebewegung von einem Betätigungsteil 6 auf das andere Betätigungsteil 6 übertragen, sodaß beide Federn 3, welche in entgegengesetzter Wickelrichtung auf die zylindrischen Lagerflächen 11 und 12 gewickelt sind, in Ihre gelöste und klemmfreie Stellung gebracht werden.

Beim Loslassen des Druckknopfes 4 wird der Betätigungsmechanismus aufgrund der Federvorspannung, welche auf das jeweilige Federende wirkt, wieder in seine Ausgangsposition zurückgepracht, wobei der Druckknopf 4 und die Betätigungsteile 6 sich entgegengesetzt zu den Pfeilrichtungen 20 und 21 in ihre Ausgangspositionen zurückbewegen. Die jeweilige Feder 3 befindet sich dann wieder in ihrer Klemmposition und bildet in gewünschter Weise jeweils das Reibschlußbauteil 15.

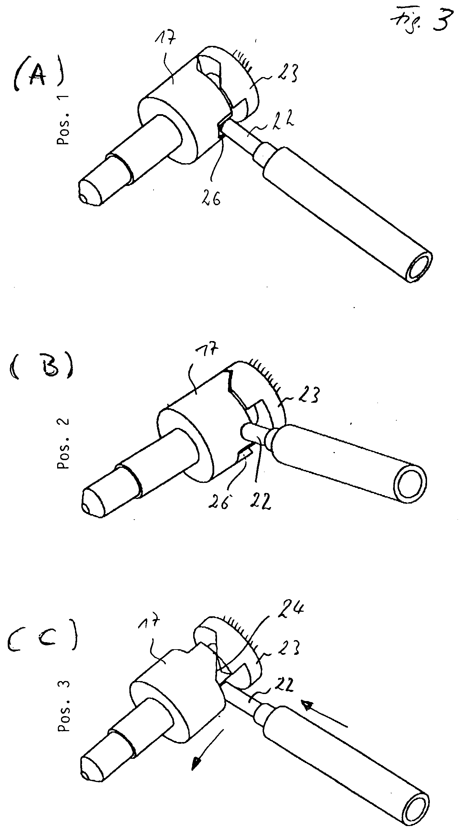

In der Figur 3 ist ein weiters Ausführungsbeispiel für einen Betätigungsmechanismus dargestellt. Bei diesem Ausführungsbeispiel ist ein Drehteil 17 vorgesehen, welches eine Nockenfläche 24 aufweist. Die Nockenfläche 24 wirkt mit einer weiteren Nockenfläche 25 an einer ortsfest an der Stützeinrichtung, beispielsweise im Lagergehäuse 9 vorgesehenen Nockenscheibe 23, zusammen. Wie aus den Figuren zu ersehen ist wird die Verdrehung des Drehteils 17 aufgrund des Zusammenwirkens der Nockenflächen 24 und 25 in eine Axialverschiebung umgewandelt, durch welche die Verschiebung der als Kulissen ausgebildeten Betätigungsteile 6 in den Figuren 1 und 2 bewirkt werden kann. Die Verschiebung kann dabei direkt auf die Betätigungsteile 6 oder, wie in den Figuren 1 und 2 dargestellt ist, über den Hebel 5 erfolgen. Die verschiedenen Positionen, welche das Drehteil 17 einnehmen kann, sind in den Darstellungen (A) bis (F) dargestellt und werden im einzelnen wie folgt erläutert.

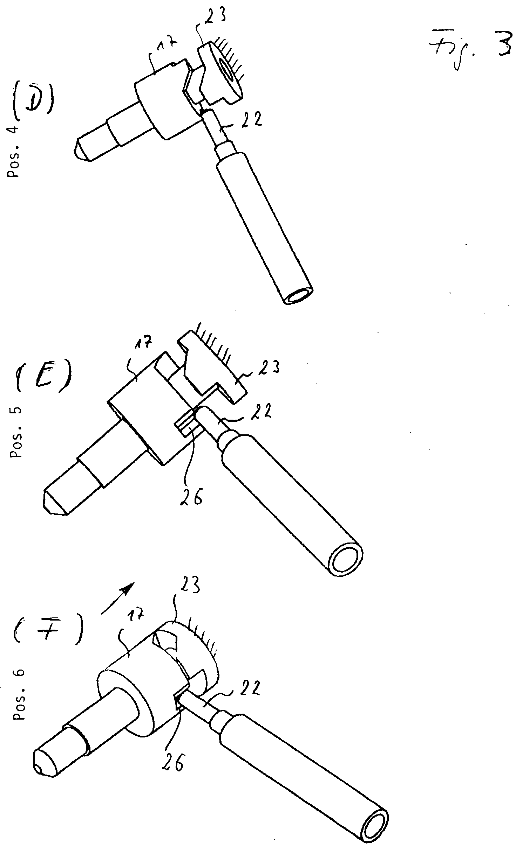

In der Darstellung (A) ist die Position des Drehteiles 17, welches drehfest mit dem Rahmen 2 bzw. dem Sütztenkörper 16 verbunden ist, in der am weitesten nach hinten geneigten Stellung des Stützenkörpers 16 dargestellt. In dieser Position greift ein Fixierstift 22, welcher federnd vorgespannt ist und welcher ortsfest an der Stützeinrichtung, bzw. im Lagergehäuse 9 vorgesehen ist, in eine Rastkerbe 26 ein. Ausgehend von dieser Position kann das Drehteil 17 und damit der Stützenkörper 16 in verschiedene Neigungspositionen gebracht werden. Wenn das Drehteil 17 die in der Figur 3 (B) dargestellte Position erreicht hat, befindet sich der Stützenkörper 16 in seiner vordersten Schwenkposition. Um den Stützenkörper 16 wieder in die hinterste Position der Figur 3 (A) zurückzubringen, wird der Stützenkörper 16 und damit das Drehteil 17 um einen bestimmten Betrag weitergedreht, sodaß eine Axialverschiebung erfolgt, die in Figur 3 (C) dargestellt ist. Diese Axialverschiebung wird durch Nockenflächen 24 und 25 am Drehteil 17 und der feststehenden Nockenscheibe 23 bewirkt. Der Fixierstift 22 wird aufgrund der auf ihn einwirkenden Federspannung in eine sich zwischen dem Drehteil 17 und der festen Nockenscheibe 23 ergebende Vertiefung eingedrückt, sodaß das Drehteil 17 in der in axialer Richtung ausgerückten Position der Figur 3 (C) bleibt während es zusammen mit dem Stützenkörper 16 in die Ausgangsposition zurückgedreht wird, wie es in Figur 4 (D) dargestellt ist. Sobald das Drehteil 17 in die hinterste Position zurückgedreht ist, kommt die Rastkerbe 26 in den Bereich neben dem vorgeschobenen Fixiersitft 22, wie es in Figur 3(E) dargestellt ist. Das Drehteil 17 kann sich dann in Axialrichtung wieder in seine Ausgangsposition zurückbewegen, wobei der Fixierstift 22 in Eingriff mit der Rastkerbe 26 kommt, wie es in Figur 3 (F) dargestellt ist. Diese Position entspricht der Ausgangsposition in der Figur 3 (A), welche auch die hinterste Schwenkposition des Stützenkörpers 16 ist.

## Patentansprüche

1. Kopfstütze für einen Fahrzeugsitz mit einem gepolsterten Stützenkörper, der mittels eines inneren Rahmens an einer im wesentlichen waagrecht verlaufenden und mittels einer Stützeinrichtung insbesonder Raststangen am Fahrzeugsitz abgestützen Lagerachse in seiner Neigung verstellbar gelagert ist,
dadruch **gekennzeichnet,**
daß mit dem inneren Rahmen (2) drehfest wenigstens eine zylindrische Lagerfläche (11, 12), deren Zylinderachse mit der Lagerachse (10) zusammenfällt, verbunden ist und daß wengistens ein an der Stützeinrichtung (Raststangen 13, 14) drehfest abgestütztes Reibschlußbauteil (15) mit lösbarem Reibschluß an der wenigstens einen zylindrischen Lagerfläche (11, 12) anliegt.

2. Kopfstütze nach Anspruch 1, dadurch gekenzeichnet, daß der Reibschluß durch eine bezüglich der Lagerachse (10) radial wirkende Klemmkraft erzeugt ist.

3. Kopfstütze nach Anspruch 1 oder 2, dadurch gekennzeichnet, daß die Klemmkraft durch wenigstens eine Feder (3) gebildet ist.

4. Kopfstütze nach einem der Ansprüche 1 bis 3, dadurch gekennzeichnet, daß die wenigstens eine zylindrische Lagerfläche (11, 12) an der Innenseite eines hülsenförmigen Lagerteils, das drehfest mit dem inneren Rahmen (2) verbunden ist, gebildet ist.

5. Kopfstütze nach einem der Ansprüch 1 bis 4, dadurch gekennzeichnet, daß die wenigstens eine zylindrische Lagerfläche (11, 12) an der Außenseite eines Lagerteils (1), das drehfest mit dem inneren Rahmen (2) verbunden ist, gebildet ist.

6. Kopfstütze nach einem der Ansprüche 1 bis 5, dadurch gekennzeichnet, daß die Lagerachse (10) durch den Stützenkörper (16) verläuft.

7. Kopfstütze nach einem der Ansprüche 1 bis 6, dadurch gekennzeichnet, daß durch den Reibschluß ein Kraftbegrenzer gebildet ist, durch den bei einem Kopfaufprall eine Belastungsverringerung erzielt ist.

8. Kopfstütze nach Anspruch 3, dadurch gekennzeichnet, daß die wenigstens eine Feder (3) als zylindrische Schraubenfeder ausgebildet ist, deren beide Enden (7, 8) drehfest an der Stützeinrichtung (Raststangen 13, 14) abgestützt sind.

9. Kopfstütze nach Anspruch 8, dadurch gekennzeichnet, daß wenigstens eines der beiden Federenden (7, 8) zum Verringern oder Lösen der Klemmkraft aus einer Klemmposition beweglich ist.

10. Kopfstütze nach einem der Ansprüche 1 bis 9, dadurch gekennzeichnet, daß die wenigstens eine als zylindrische Schraubenfeder ausgebildete Feder (3) mit ihrer Innenseite auf der zylindrischen Außenseite des Lagerteils (1) mit lösbarem Klemmsitz angeordnet ist.

11. Kopfstütze nach einem der Ansprüche 1 bis 9, dadurch gekennzeichnet, daß die wenigstens eine als zylindrische Schraubenfeder ausgebildete Feder (3) mit ihrer Außenseite an der zylindrischen Innenseite des hülsenförmig ausgebildeten Lagerteils (1) mit lösbarem Klemmsitz angeordnet ist.

12. Kopfstüzte nach einem der Ansprüch 1 bis 11, dadurch gekennzeichnet, daß am Lagerteil (1) zwei gegensinnig gewickelte zylindrische Schraubenfedern angeordnet sind.

13. Kopfstütze nach einem der Ansprüch 1 bis 12, dadurch gekennzeichnet, daß das wenigstens eine Federende (7, 8) durch ein axialverschiebbares Betätigungsteil (6) aus der Klemmposition bewegbar ist.

14. Kopfstütze nach Anspruch 13, dadurch gekennzeichent, daß das Betätigungsteil (6) durch einen von außen ausübbaren, axialgerichteten Druck verschiebbar ist.

15. Kopfstütze nach Anspruch 13, dadurch gekennzeichnet, daß das Betätigungsteil (6) durch ein um die Lagerachse (10) drehbares und dabei axialverschiebbares Drehteil (17) verschiebbar ist.
